# EUROPÄISCHE PATENTSCHRIFT

(11) **EP 1 401 681 B1**
(45) Veröffentlichungstag und Bekanntmachung des Hinweises auf die Patenterteilung: **23.03.2016**
(21) Anmeldenummer: 02754225.7
(22) Anmeldetag: 18.06.2002
(51) Int. Cl.: B60R 11/02, B60K 37/06

(54) **BEDIENVORRICHTUNG**
CONTROL DEVICE
DISPOSITIF DE COMMANDE

(30) Priorität: 19.06.2001 DE 10129442
(43) Veröffentlichungstag der Anmeldung: 31.03.2004
(73) Patentinhaber: ROBERT BOSCH GMBH, 70442 Stuttgart (DE)
(72) Erfinder: STROHMEIER, Wolfgang, 31137 Hildesheim (DE)
(86) Internationale Anmeldenummer: PCT/DE2002/002212
(87) Internationale Veröffentlichungsnummer: WO 2002/102623

(56) Entgegenhaltungen:
- EP-A- 0 558 331
- WO-A-01/98111
- WO-A-98/39852
- WO-A-99/30221
- DE-U- 9 109 141
- US-A- 6 067 078
- PATENT ABSTRACTS OF JAPAN vol. 1996, no. 03, 29. März 1996 (1996-03-29) & JP 07 291045 A (FUJITSU TEN LTD), 7. November 1995 (1995-11-07)

## Beschreibung

### Stand der Technik

Die Erfindung geht aus von einer Bedienvorrichtung nach der Gattung des Hauptanspruchs. Es sind schon Bedienvorrichtungen bekannt, insbesondere für Autoradios in Kraftfahrzeugen, bei denen an einer Frontblende des Radios Drehknöpfe links und rechts von einer Anzeige angeordnet sind. Einer der Drehknöpfe dient einer Lautstärkeregelung, der andere einer Sendereinstellung. Ferner sind Autoradios bekannt, bei denen zwei Bedienknöpfe mit diesen Funktionen beide auf einer Seite einer Anzeige angeordnet sind. Ferner sind Bedienvorrichtungen bekannt, bei denen erst nach Ausklappen einer Frontabdeckung Bedienteile und/oder eine Anzeige zugänglich sind. Bei der Darstellung aller Informationen auf nur einer Anzeige ist die Informationsdichte der angezeigten Daten hoch und damit sehr zuwendungsintensiv, bis eine gewünschte Information abgelesen ist. Damit kann ein Fahrer durch ein Betrachten der Anzeige abgelenkt werden. Bei einer Anordnung von Bedienteilen auf beiden Seiten der Anzeige ist zumindest eines der Bedienteile weiter von einem Fahrer angeordnet, so daß insbesondere eine Bedienung während der Fahrt erschwert wird. Werden beide Bedienteile auf einer Anzeigenseite angeordnet, so sind sie zwar möglicherweise nah bei einem Fahrer positioniert, aufgrund der räumlichen Nähe zueinander ist eine Bedienung jedoch erschwert. Bei einem Abklappen einer Frontblende geht einer Bedienung der Aufklappvorgang voraus, so daß auch hier die Bedienung während der Fahrt hinderlich ist.

Aus der WO 99/30221 A1 ist eine Steuerungseinrichtung, insbesondere für Kraftfahrzeug bekannt, die einen Bildschirm aufweist. Um den Bildschirm herum sind verschiedene Bedienelemente für den Bildschirm angeordnet. Eine weitere Bedienelementgruppe kann relativ zu dem Bildschirm bewegt werden. Insbesondere kann sie an eine Position über dem Bildschirm verschoben werden. Bei einer Anordnung über dem Bildschirm, teilt sie den Bildschirm in unterschiedliche Felder auf, in denen unterschiedliche Informationen angezeigt werden können.

### Vorteile der Erfindung

Die erfindungsgemäße Bedienvorrichtung mit den Merkmalen des Hauptanspruchs hat demgegenüber den Vorteil, daß durch eine zentrale Anordnung eines Bedienelements zwischen zwei Anzeigen das Bedienelement für einen Fahrer und einen Beifahrer gleichermaßen gut zugänglich ist. Ferner wird durch die Untergliederung der Anzeige die Übersichtlichkeit der dargebotenen Informationen erhöht, so daß sie für einen Fahrer leichter erfassbar sind. Dies wird insbesondere bei einer festen Zuordnung der Informationen zu einzelnen Anzeigen erreicht. Ferner kann die Bedienvorrichtung insbesondere bei der Verwendung in Kraftfahrzeugen gleichermaßen in rechtsgesteuerten und linksgesteuerten Kraftfahrzeugen eingesetzt werden, ohne eine Anordnung von Bedienelementen an eine Fahrerposition anpassen zu müssen.

Durch die in Unteransprüchen aufgeführten Maßnahmen sind vorteilhafte Weiterbildungen und Verbesserungen der im Hauptanspruch angegebenen Bedienvorrichtung möglich. Besonders vorteilhaft ist, daß das Bedienelement als eine Wippe ausgeführt ist, da hierdurch insbesondere ein Wechsel zwischen der ersten und der zweiten Anzeige intuitiv möglich ist. Ferner ermöglicht insbesondere eine Kreuzwippe eine einfache Auswahl aus einem zweidimensionalen Auswahlfeld.

Weiterhin ist vorteilhaft, zusätzlich eine Drucktaste vorzusehen, mit der eine ausgewählte Funktion oder ein ausgewählter Funktionswert bestätigt werden kann, wobei ein Betätigen der Drucktaste einem Betätigen der Eingabetaste (Enter-Taste) an einem herkömmlichen Computer entsprechen kann.

Weiter ist vorteilhaft, das Bedienelemente auch als einen Drehknopf auszuführen, da hierdurch herkömmliche, lineare Einstellungen, z.B. eine Lautstärkeregelung, leicht erfassbar sind. Insbesondere ist dabei vorteilhaft, die genannten Funktionen Wippe, Drucktaste und Drehknopf in einem Bedienelement zu vereinigen. Hierdurch können alle wesentlichen Funktionen in dem Bedienelement zwischen der ersten und der zweiten Anzeige konzentriert werden, so daß für die Bedienung im Wesentlichen nur noch das zentrale Bedienelement benötigt wird. Dies erleichtert insbesondere eine Bedienung während einer Fahrt, in der ein Fahrer das Bedienelement nicht betrachten kann, und ein Umgreifen zwischen verschiedenen Bedienelementen nicht mehr erforderlich ist. Statt dessen lassen sich mit einem Zugriff alle wichtigen Funktionen bedienen, wie bei einem Radio z.B. die Lautstärkeregelung und der Sendersuchlauf.

Weiterhin ist vorteilhaft, neben den Anzeigen weitere Bedienelemente anzuordnen, z.B. in Form sogenannter Soft-Keys, bei der neben den Anzeigen angeordneten Bedienelementen über eine Darstellung in der Anzeige eine spezielle Funktion jeweils zugewiesen wird. Ferner können auch weitere Bedienelemente angeordnet sein, z.B. Senderstations-Tasten mit einer den Tasten jeweils fest zuweisbaren Senderfrequenz.

Weiterhin ist vorteilhaft, als Anzeigen Flüssigkristallanzeigen zu verwenden, die eine gute Bildqualität gewährleisten, auf der zahlreiche Informationen darstellbar sind und die nur eine geringe Einbautiefe aufweisen, so daß die Bedienvorrichtung als eine flache Platte gestaltet werden kann.

Weiterhin ist vorteilhaft, die Bedienvorrichtung auf einer Frontplatte anzuordnen, so daß diese mitnehmbar ist und damit ein Diebstahlschutz für eine zu bedienende Vorrichtung, insbesondere für das Autoradio, gewährleistet ist, sofern das Autoradio nur mit der aufgesetzten Bedienvorrichtung bedienbar ist.

Weiterhin ist vorteilhaft, der ersten Anzeige Informationen zu einem ausgewählten Sender zuzuweisen und der zweiten Anzeige Informationen zu einer eingestellten Lautstärke zuzuweisen. Hierdurch ist eine übersichtliche Information für einen Benutzer möglich, da Senderinformationen, also Informationen, die sich auf eine Art der wiedergegebenen Informationen bezieht, und Lautstärkeinformationen, vorzugsweise ergänzt durch Klang- oder Balanceinformationen, in getrennten Anzeigen dargestellt werden und ein Betrachter hierdurch auf einfache Weise zwischen diesen beiden unterschiedlichen Informationen unterscheiden kann.

### Zeichnung

Ausführungsbeispiele der Erfindung sind in der Zeichnung dargestellt und in der nachfolgenden Beschreibung näher erläutert. Es zeigen Figur 1 ein Blockdiagramm für ein erfindungsgemäßes Autoradio mit einer erfindungsgemäßen Bedienvorrichtung, Figur 2 eine erfindungsgemäße Bedienvorrichtung bei der Verwendung für ein Autoradio in einer Aufsicht, Figur 3 die erfindungsgemäße Bedienvorrichtung mit einem erfindungsgemäßen Autoradio in einem Längsschnitt, Figur 4 ein Ausführungsbeispiel für ein Bedienelement einer erfindungsgemäßen Bedienvorrichtung.

### Beschreibung des Ausführungsbeispiels

Die erfindungsgemäße Bedienvorrichtung kann für die Bedienung beliebiger elektrischer Geräte verwendet werden. Insbesondere ist eine Verwendung bei Geräten vorteilhaft, bei denen nur begrenzter Platz für eine Bedienvorrichtung zur Verfügung steht. Dies ist insbesondere bei Geräten in Fahrzeugen der Fall, bei denen zahlreiche Funktionen einem Benutzer angeboten werden, jedoch der für die Bedienung zur Verfügung stehende Platz, im Allgemeinen im Bereich einer Instrumententafel oder einer Mittelkonsole des Fahrzeugs, nur gering ist. Als elektrische Geräte in Fahrzeugen werden z.B. Navigationsvorrichtungen, Bordcomputer, Autoradios oder Integrationen verschiedener dieser Funktionen in einem elektrischen Gerät verwendet. Im Folgenden wird eine erfindungsgemäße Bedienvorrichtung am Beispiel eines Autoradios in einem Kraftfahrzeug erläutert.

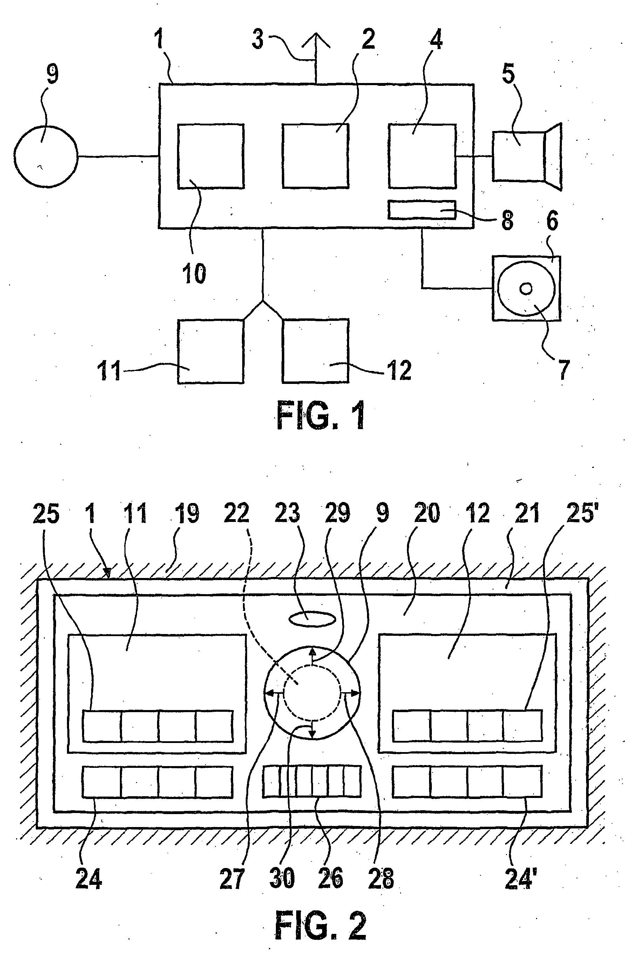

In der Figur 1 ist ein Blockschaltbild für ein erfindungsgemäßes Autoradio mit einer erfindungsgemäßen Bedienvorrichtung dargestellt. In einem Autoradio 1 ist eine Funkempfangsvorrichtung 2 zur Umwandlung eines über eine Antenne 3 empfangenen Funksignals in ein Audiosignal angeordnet. Das Audiosignal wird zu einer Verstärkereinheit 4 weitergeleitet, die das Audiosignal über einen Lautsprecher 5 ausgibt. Ferner kann das Autoradio 1 auch auf ein Datenträgerlaufwerk 6 mit einem Musikdatenträger 7 zugreifen, dessen Musikdaten ausgelesen, vorzugsweise von einem Analog-Digital-Wandler 8 verarbeitet und ebenfalls über die Verstärkereinheit 4 auf den Lautsprecher 5 ausgegeben werden. Eine Bedienung des Autoradios 1 erfolgt über ein Bedienelement 9, das auf einer Bedienvorrichtung gemeinsam mit einer ersten Anzeige 11 und einer zweiten Anzeige 12 angeordnet ist. Eine Bedienung erfolgt durch ein Kippen, Drehen und/oder Drücken des Bedienelements 9 wobei eine Rückmeldung über eine erfolgte Bedienung auf den Anzeigen 11, 12 ausgegeben wird. Eine Betätigung des Bedienelements 9 wird über eine in dem Autoradio 1 angeordnete Recheneinheit 10 ausgewertet, von der auch die Anzeigen 11, 12 angesteuert werden.

Das Autoradio 1 ist dabei vorzugsweise in einer Mittelkonsole eines Kraftfahrzeugs in einem genormten Einbauschacht angeordnet. Neben den Funktionen der Wiedergabe der Musikdaten und eines Empfangs eines, Radioprogramms über die Antenne 3 können weitere, in der Figur 1 nicht dargestellte Funktionen in das Autoradio 1 integriert sein, so z.B. eine Bordcomputerfunktion, bei der die Recheneinheit 10 Fahrzeugdaten in den Anzeigen 11, 12 zur Anzeige bringt, die das Autoradio 1 über einen Datenbus erhalten hat. Ferner kann eine Navigationsfunktion zur Führung eines Fahrzeugs in einem Straßennetz in dem Autoradio 1 vorgesehen sein, bei der die Recheneinheit 10 eine Fahrtroute von einer Fahrzeugposition zu einem vorzugsweise über das Bedienelement 9 eingegebenen Fahrziel berechnet und Fahranweisungen für den Weg dorthin ausgibt. Ferner kann eine Telefonfunktion in das Autoradio 1 integriert sein, bei dem das Autoradio 1 eine Funkverbindung über eine weitere, in der Figur 1 nicht dargestellte Funkschnittstelle herstellt, z.B. über eine Mobiltelefoneinheit, wobei empfangene Audiosignale über den Lautsprecher 5 ausgegeben und ein Sprachsignal über ein in der Figur 1 nicht dargestelltes Mikrophon aufgenommen wird.

In der Figur 2 ist eine Aufsicht auf ein erfindungsgemäßes Autoradio 1 mit einer erfindungsgemäßen Bedienvorrichtung 20 dargestellt. Das Autoradio 1 ist in eine Öffnung einer Mittelkonsole 19 des Fahrzeugs eingesetzt. Die Bedienvorrichtung 20 ist in einen Rahmen 21 des Autoradios 1 eingesetzt und wird dort gehaltert. An der Bedienvorrichtung 20 ist das Bedienelemente 9 mittig zwischen der ersten Anzeige 11 und der zweiten Anzeige 12 angeordnet. Das Bedienelement 9 weist eine Mulde 22 auf, die eine Drucktastenfunktion des Bedienelements 9 erleichtert. Oberhalb des Bedienelements 9 ist eine Auslösetaste 23 zum Herauslösen der Bedienvorrichtung 20 aus dem Rahmen 21 angeordnet. Durch ein Betätigen der Auslösetaste 23 wird ein Rasthaken zurückgezogen, mit dem die Bedienvorrichtung 20 in dem Rahmen 21 des Autoradios 1 gehalten wird. Auf einer Unterseite der ersten und der zweiten Anzeige 11, 12 sind Drucktasten 24 an der ersten Anzeige 11 und Drucktasten 24' an der zweiten Anzeige 12 angeordnet, die einem jeweiligen Anzeigebereich 25, 25' an einer der jeweils den Drucktasten 24, 24' zuweisenden Seiten der Anzeigen 11, 12 zugeordnet sind. Damit ist eine Zuweisung einer in der Anzeige 11, 12 in den Anzeigebereichen 25, 25' dargestellten Informationen zu den Drucktasten 24, 24' möglich. Ferner sind als Drucktasten ausgebildete Stationstasten 26 an der Bedienvorrichtung 20 angeordnet, die als Stationstasten ausgebildet sind, wobei den Stationstaste jeweils eine Senderfrequenz zugewiesen ist, so daß bei einem Drücken einer Stationstaste das Autoradio 1 den entsprechend angewählten Sender einstellt und das Programm des Senders über den Lautsprecher 5 wiedergibt. In einem bevorzugten Ausführungsbeispiel dient die erste Anzeige 11 der Darstellung von Senderinformationen, z.B. einem Sendernamen oder einer Senderfrequenz bzw. einer Nummer einer zugehörigen Stationstaste 26. Ferner ist auch möglich, eine Information über eine Empfangsqualität eines Senders darzustellen, z.B. in Form eines Balkendiagramms. Die Drucktasten 24 sowie die Anzeigenbereiche 25 beziehen sich ebenfalls auf Senderinformationen. Ferner kann eine Uhrzeit, z.B. eine von einem Sender empfangene Uhrzeit, in der ersten Anzeige 11 dargestellt werden. Die erste Anzeige 11 kann als eine Flüssigkristallanzeige ausgeführt sein. Jedoch kann die erste Anzeige 11 auch aus verschiedenen Anzeigenteilen bestehen. So kann z.B. zusätzlich zu einer Flüssigkristallanzeige eine Leuchtdiodenanzeige angeordnet sein.

In der zweiten Anzeige 12 wird eine Information über eine ausgewählte Lautstärke, eine eingestellte Balance und/oder über eine entsprechende Klanghöhe dargestellt. Werden in das Autoradio 1 weitere Funktionen mit eingebracht, so dient insbesondere die zweite Anzeige 12 dazu, gegebenenfalls Navigations- und telematikbezogene Informationen sowie Telefondaten darzustellen. Durch ein Drehen des Bedienelements 9 ist vorzugsweise eine Lautstärke der Ausgabe über den Lautsprecher 5 einstellbar. Das Bedienelement 9 ist ferner kippbar ausgeführt, wobei vorzugsweise vier Kipprichtungen vorgegeben sind. Die Kipprichtungen sind durch an dem Bedienelement 9 angeordnete Pfeile dargestellt, einem ersten Pfeil 27 in Richtung der ersten Anzeige 11, einem zweiten Pfeil 28 in Richtung der zweiten Anzeigen 12, einem dritten Pfeil 29 in Richtung der Auslösetaste 23 und einem vierten Pfeil 30 in Richtung der Stationstasten 26. Mit einem Kippen in Richtung der ersten Anzeige 11 oder der zweiten Anzeige 12 wird auf eine Auswahl in eine der beiden Anzeigen umgeschaltet. Durch ein Kippen in Richtung der Auslösetaste 23 oder der Stationstasten 26 wird eine ausgewählte Funktion innerhalb der Anzeigenbereiche 25, 25' ausgewählt. Durch ein Drücken auf das Bedienelement 9 im Bereich der Mulde 22 werden der ausgewählte Funktionswert und/oder die ausgewählte Funktion bestätigt und damit eingegeben. Mögliche, auswählbare Funktionen während eines Radiobetriebs sind z.B. für die erste Anzeige 11 ein RDS-Betrieb (Radio Data System) ein Programmtyp (z.B. Nachrichten, Popmusik, Klassische Musik) eine Sendeempfindlichkeit (Nahsender, weit entfernte Sender), ein Verkehrsprogramm (z.B. Verkehrsfunk-Indikation, TMC-Kanal). In der zweiten Anzeige ist z.B. eine Rauschunterdrückung, eine Bedienung des Datenträgerlaufwerks 6 oder eine Klangfarbeneinstellung (Equalizerfunktion) auswählbar.

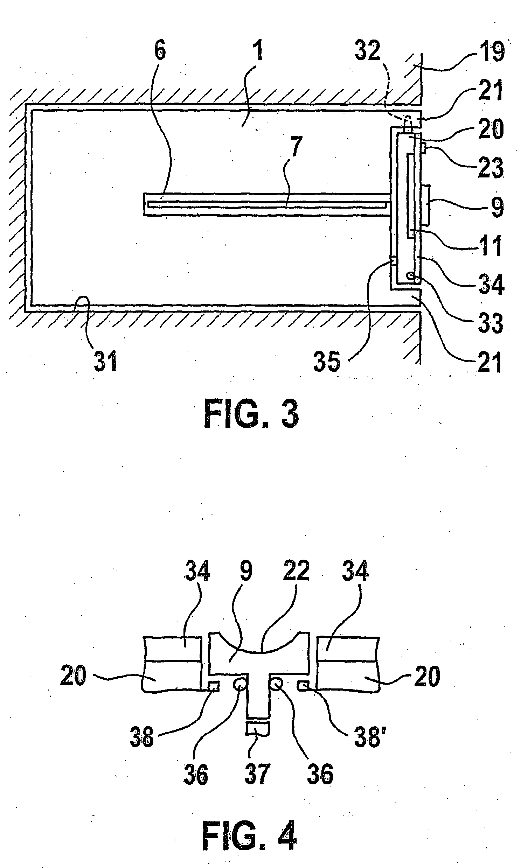

In der Figur 3 ist ein Längsschnitt durch eine erfindungsgemäße Autoradiovorrichtung dargestellt. Hier und im Folgenden bezeichnen die gleichen Bezugszeichen auch die gleichen Elemente. Das Autoradio 1 ist in einen genormten Einbauschacht 31 eingesetzt. Die Bedienvorrichtung 20 wird durch einen Rasthaken 32 gehalten, der in den Rahmen 21 hineinragt. Durch ein Betätigen der Auslösetaste 23 ist der Rasthaken 32 in die Bedienvorrichtung 20 zurückziehbar, so daß die Bedienvorrichtung entlang einer Drehachse 33 aufklappbar und nach einem Aufklappen auch herausnehmbar ist. Die Bedienvorrichtung 20 verdeckt das Datenträgerlaufwerk 6, so daß nach einem Aufklappen um ca. 90° der Bedienvorrichtung 20 ein Musikdatenträger 7, z.B. eine sogenannte Compact-Disc, in das Datenträgerlaufwerk 6 eingeschoben werden kann. Für die Verwendung des Autoradios 1 als eine Navigationsvorrichtung kann auch ein Datenträger mit Navigationsdaten verwendet werden. Eine einem Benutzer zuweisende Frontseite 34 der Bedienvorrichtung 20 ist vorzugsweise aus einem transparenten Kunststoffmaterial ausgeführt, das beide Anzeigen abdeckt, insbesondere um die Anzeigen vor einer Beschädigung zu schützen. Das Bedienelement 9 ragt in einem bevorzugten Ausführungsbeispiel über die Frontseite 34 hervor. Die Bedienvorrichtung 20 steht über eine elektrische Schnittstelle 35 mit dem Autoradio 1 in Verbindung. Elektrische Bauteile wie z.B. die Recheneinheit 10 oder die Verstärkereinheit 4 sind in der Figur 3 nicht eingezeichnet. Eine Funktion des Autoradios erfolgt nur dann, wenn das richtige Bedienteil, das über die elektrische Schnittstelle 35 identifizierbar ist, in die von dem Rahmen 21 eingeschlossene Öffnung auf die elektrische Schnittstelle 35 mit dem Autoradio 1 aufgesetzt wird.

In der Figur 4 ist ein erfindungsgemäßes Bedienelement in einem seitlichen Schnitt dargestellt. Das Bedienelement 9 ist auf Kugeln 36 drehbar gelagert. Ferner kann durch einen Druck in die Mulde 22 auch ein Schalter 37 ausgelöst werden, der diesen Druck erfassen kann. Die in der Frontseite 34 vorgesehene Öffnung für das Bedienelement 9 erlaubt ferner ein Kippen, wobei bei dem Kippen Tastschalter 38, 38' auslösbar, über die ein Kippen des Bedienelements 9 erfasst werden kann. Damit ist sowohl eine Dreh-, eine Druck- als auch eine Kippfunktionalität mit dem Bedienelement 9 realisiert.

## Patentansprüche

1. Bedienvorrichtung, insbesondere für ein Autoradio, **dadurch gekennzeichnet dass** an der Bedienvorrichtung (20) eine erste Anzeige (11) und eine zweite Anzeige (12) jeweils zur Darstellung einer Vielzahl von Informationen getrennt angeordnet sind und dass ein Bedienelement (9) derart zwischen der ersten Anzeige (11) und der zweiten Anzeige (12) angeordnet ist, dass es mit der ersten Anzeige (11) und der zweiten Anzeige (12) zusammenwirkt.

2. Bedienvorrichtung nach Anspruch 1, **dadurch gekennzeichnet, dass** an dem Bedienelement (9) eine Wippe angeordnet ist, vorzugsweise eine Kreuzwippe.

3. Bedienvorrichtung nach einem der vorhergehenden Ansprüche, **dadurch gekennzeichnet, dass** an dem Bedienelement (9) eine Drucktaste angeordnet ist und dass durch ein Betätigen der Drucktaste eine ausgewählte Funktion und/oder ein ausgewählter Funktionswert bestätigbar ist.

4. Bedienvorrichtung nach einem der vorhergehenden Ansprüche, **dadurch gekennzeichnet, dass** an dem Bedienelement (9) ein Drehknopf angeordnet ist.

5. Bedienvorrichtung nach einem der vorhergehenden Ansprüche, **dadurch gekennzeichnet, dass** neben den Anzeigen (11, 12) weitere Bedienelemente (24, 24') angeordnet sind.

6. Bedienvorrichtung nach Anspruch 5, **dadurch gekennzeichnet, dass** den neben den Anzeigen (11, 12) angeordneten Bedienelementen (24, 24') über eine Darstellung (25, 25') in den Anzeigen (11, 12) eine Funktion jeweils zugewiesen ist.

7. Bedienvorrichtung nach einem der vorhergehenden Ansprüche, **dadurch gekennzeichnet, dass** die erste und/oder die zweite Anzeige (11, 12) Flüssigkristallanzeigen sind.

8. Bedienvorrichtung nach einem der vorhergehenden Ansprüche, **dadurch gekennzeichnet, dass** durch eine Betätigung des Bedienelements (9) zwischen einer Auswahl in der ersten und in der zweiten Anzeige (11, 12) umgeschaltet wird.

9. Bedienvorrichtung nach einem der vorhergehenden Ansprüche, **dadurch gekennzeichnet, dass** eine einem Benutzer zuweisende Frontseite (34) der Bedienvorrichtung (20) aus einem transparenten Kunststoffmaterial derart ausgeführt ist, dass sie beide Anzeigen (11, 12) abdeckt.

10. Autoradio mit einer Bedienvorrichtung nach einem der vorhergehenden Ansprüche.

11. Autoradio nach Anspruch 10, **dadurch gekennzeichnet, dass** die Bedienvorrichtung (20) eine Frontklappe des Autoradios (1) ist und dass die Bedienvorrichtung (20) abnehmbar und/oder abklappbar ist.

12. Autoradio nach Anspruch 11, **dadurch gekennzeichnet, dass** das Bedienelement (9) ungefähr mittig auf einer Frontseite (34) der Bedienvorrichtung (20) angeordnet ist.

13. Autoradio nach einem der Ansprüche 10 bis 12, **dadurch gekennzeichnet, dass** in der ersten Anzeige (11) Informationen zu einem ausgewählten Sender dargestellt sind und dass in der zweiten Anzeige (12) Informationen zu einer eingestellten Lautstärke dargestellt sind.

## Claims

1. Operating device, in particular for a car radio, **characterized in that** a first display (11) and a second display (12) each for displaying a multiplicity of items of information are arranged separately on the operating device (20), and **in that** an operating element (9) is arranged between the first display (11) and the second display (12) in such a manner that it interacts with the first display (11) and with the second display (12).

2. Operating device according to Claim 1, **characterized in that** a rocker, preferably a four-way rocker, is arranged on the operating element (9).

3. Operating device according to one of the preceding claims, **characterized in that** a pushbutton is arranged on the operating element (9), and **in that** a selected function and/or a selected function value can be confirmed by actuating the pushbutton.

4. Operating device according to one of the preceding claims, **characterized in that** a rotary knob is arranged on the operating element (9).

5. Operating device according to one of the preceding claims, **characterized in that** further operating elements (24, 24') are arranged beside the displays (11, 12).

6. Operating device according to Claim 5, **characterized in that** the operating elements (24, 24') arranged beside the displays (11, 12) are each allocated a function by means of a representation (25, 25') in the displays (11, 12).

7. Operating device according to one of the preceding claims, **characterized in that** the first and/or the second display (11, 12) is/are liquid-crystal displays.

8. Operating device according to one of the preceding claims, **characterized in that** actuation of the operating element (9) changes over between a selection in the first and second displays (11, 12).

9. Operating device according to one of the preceding claims, **characterized in that** a front side (34) of the operating device (20) facing a user is configured from a transparent plastic material such that it covers both displays (11, 12).

10. Car radio having an operating device according to one of the preceding claims.

11. Car radio according to Claim 10, **characterized in that** the operating device (20) is a front flap of the car radio (1), and **in that** the operating device (20) can be removed and/or folded out.

12. Car radio according to Claim 11, **characterized in that** the operating element (9) is arranged approximately centrally on a front side (34) of the operating device (20).

13. Car radio according to one of Claims 10 to 12, **characterized in that** information relating to a selected station is displayed in the first display (11), and **in that** information relating to a set volume is displayed in the second display (12).

## Revendications

1. Dispositif de commande, notamment pour une autoradio, **caractérisé en ce que** sur le dispositif de commande (20) sont disposés séparément un premier afficheur (11) et un deuxième afficheur (12) servant respectivement à représenter une pluralité d'informations et **en ce qu'**un élément de commande (9) est disposé entre le premier afficheur (11) et le deuxième afficheur (12) de telle sorte qu'il coopère avec le premier afficheur (11) et le deuxième afficheur (12).

2. Dispositif de commande selon la revendication 1, **caractérisé en ce qu'**une touche à bascule, de préférence une touche à bascule en forme de croix, est disposée sur l'élément de commande (9).

3. Dispositif de commande selon l'une des revendications précédentes, **caractérisé en ce qu'**un bouton-poussoir est disposé sur l'élément de commande (9) et **en ce qu'**une fonction sélectionnée et/ou une valeur de fonction sélectionnée peut être validée par un actionnement du bouton-poussoir.

4. Dispositif de commande selon l'une des revendications précédentes, **caractérisé en ce qu'**un bouton rotatif est disposé sur l'élément de commande (9).

5. Dispositif de commande selon l'une des revendications précédentes, **caractérisé en ce que** des éléments de commande supplémentaires (24, 24') sont disposés à côté des afficheurs (11, 12).

6. Dispositif de commande selon la revendication 5, **caractérisé en ce qu'**une fonction est respectivement associée aux éléments de commande (24, 24') qui sont disposés à côté des afficheurs (11, 12) par le biais d'une représentation (25, 25') sur les afficheurs (11, 12).

7. Dispositif de commande selon l'une des revendications précédentes, **caractérisé en ce que** le premier et/ou le deuxième afficheur (11, 12) sont des afficheurs à cristaux liquides.

8. Dispositif de commande selon l'une des revendications précédentes, caractérisé en' ce qu'un actionnement de l'élément de commande (9) permet de basculer entre une sélection dans le premier et dans le deuxième afficheur (11, 12).

9. Dispositif de commande selon l'une des revendications précédentes, **caractérisé en ce qu'**une face avant (34) du dispositif de commande (20) qui est dirigée vers un utilisateur est réalisée dans une matière plastique transparente de telle sorte qu'elle recouvre les deux afficheurs (11, 12).

10. Autoradio équipée d'un dispositif de commande selon l'une des revendications précédentes.

11. Autoradio selon la revendication 10, **caractérisée en ce que** le dispositif de commande (20) est un volet avant de l'autoradio (1) et **en ce que** le dispositif de commande (20) est amovible et/ou rabattable.

12. Autoradio selon la revendication 11, **caractérisée en ce que** l'élément de commande (9) est disposé approximativement au centre sur une face avant (34) du dispositif de commande (20).

13. Autoradio selon l'une des revendications 10 à 12, **caractérisée en ce que** des informations à propos d'un émetteur sélectionné sont représentées sur le premier afficheur (11) et **en ce que** des informations sur un volume sonore réglé sont représentées sur le deuxième afficheur (12).
